# EUROPÄISCHE PATENTSCHRIFT

(11) **EP 1 881 303 B1**
(45) Veröffentlichungstag und Bekanntmachung des Hinweises auf die Patenterteilung: **28.11.2018**
(21) Anmeldenummer: 07014183.3
(22) Anmeldetag: 19.07.2007
(51) Int. Cl.: G01F 1/84

(54) **Coriolis-Massendurchflussmessgerät**
Coriolis Mass flow measuring device
Débitmètre à effet Coriolis

(30) Priorität: 21.07.2006 DE 102006034274
(43) Veröffentlichungstag der Anmeldung: 23.01.2008
(73) Patentinhaber: Krohne AG, 4019 Basel (CH)
(72) Erfinder: Rolph, Chris, Hartwell, Northampton NN7 2HA (GB); Cook, Vincent, Northampton, NN6 0NA (GB); Hussain, Yousif, Northampton NN3 3DA (GB)
(74) Vertreter: Gesthuysen Patent- und Rechtsanwälte

(56) Entgegenhaltungen:
- WO-A1-2004/017027
- JP-A- 2002 340 648
- US-B1- 6 415 668

## Beschreibung

Die Erfindung betrifft ein Massendurchflußmeßgerät, das nach dem Coriolis-Prinzip arbeitet, mit zwei wenigstens in einem Abschnitt in einer gemeinsamen Ebene verlaufenden Meßrohren und einer Verbindungseinrichtung, mittels derer die beiden Meßrohre in dem Abschnitt, in dem sie in der gemeinsamen Ebene verlaufen, miteinander verbunden sind.

WO 2004/017027 beschreibt ein Massendurchflussmessgerät nach dem Stand der Technik. Die vorliegende Erfindung betrifft also derartige Coriolis-Massendurchflußmeßgeräte, die wenigstens zwei Meßrohre ausweisen, die im nichtschwingenden Zustand wenigstens abschnittsweise in einer gemeinsamen Ebene verlaufen, typischerweise nämlich parallel zueinander sind. Wesentlich bei solchen Coriolis-Massendurchflußmeßgeräten mit zwei Meßrohren ist das Vorsehen wenigstens einer, typischerweise jedoch zweier Verbindungseinrichtungen, wie oben beschrieben. Diese Verbindungseinrichtungen bestimmen die effektive Länge des Meßbereichs, da sie die Meßrohre fixieren und damit bei der Schwingungsanregung der Meßrohre jeweils einen Schwingungsknoten definieren. Solche Verbindungseinrichtungen werden daher auch als Schwingungsknotenplatten (Node Plates) bezeichnet.

Während sich zwischen zwei solchen Schwingungsknotenplatten der eigentliche Meßbereich der Meßrohre befindet, stellen die einlaufseitigen bzw. auslaufseitigen Abschnitte der Meßrohre vor bzw. hinter den Schwingungsknotenplatten die jeweilige Verbindung zu dem Rohrleitungssystem her, in das das Coriolis-Massendurchflußmeßgerät eingebaut ist. Dabei tragen diese einlauf- bzw. auslaufseitigen Abschnitte der Meßrohre auch zur Schwingungsisolierung des Coriolis-Massendurchflußmeßgeräts von dem Rohrleitungssystem bei.
Neben der Bestimmung der effektiven Meßbereichslänge des Coriolis-Massendurchflußmeßgeräts dienen die Verbindungseinrichtungen auch dazu, die Anregungsschwingungen der Meßrohre, die innerhalb der gemeinsamen Ebene der Meßrohre erfolgen, von dazu orthogonalen Schwingungen frequenzmäßig zu trennen. Je größer der Frequenzabstand zwischen diesen beiden Schwingungen ist, um so weniger beeinflussen sich diese beiden Schwingungen untereinander, so daß es letztlich auch zu einer entsprechend geringen Beeinflussung des Meßsignals kommt. Diesbezüglich besteht bei aus der Praxis bekannten Coriolis-Massendurchflußmeßgeräten mit zwei oder mehr Meßrohren jedoch noch Verbesserungsbedarf, da die Beeinflussung der Anregungsschwingungen in der gemeinsamen Ebene der Meßrohre durch dazu orthogonale Schwingungen der Meßrohre und damit letztlich auch die Störung des Meßsignals noch zu groß ist.

Dementsprechend ist es die Aufgabe der Erfindung, ein derartiges Coriolis-Massendurchflußmeßgerät anzugeben, bei dem die Anregungsschwingungen der Meßrohre in der gemeinsamen Ebene der Meßrohre durch dazu orthogonale Schwingungen der Meßrohre möglichst wenig beeinflußt werden.

Ausgehend von dem eingangs beschriebenen Coriolis-Massendurchflußmeßgerät ist diese Aufgabe dadurch gelöst, daß die Verbindungseinrichtung eine an beiden Meßrohren befestigte und parallel zur gemeinsamen Ebene der Meßrohre angeordnete Versteifungsplatte aufweist und an der Versteifungsplatte eine Versteifungsfinne vorgesehen ist.

Erfindungswesentlich ist also, daß neben einer Versteifungsplatte, die an den beiden Meßrohren z.B. mittels Verschweißen befestigt ist, zusätzlich eine weitere Versteifungseinrichtung, nämlich eine Versteifungsfinne vorgesehen ist. Diese Versteifungsfinne ist an der Versteifungsplatte befestigt, so daß die Steifigkeit der Versteifungsplatte durch die Anbringung der Versteifungsfinne beeinflußt wird.

Grundsätzlich kann die Versteifungsfinne in unterschiedlicher Anordnung auf der Versteifungsplatte vorgesehen sein. Gemäß einer bevorzugten Weiterbildung der Erfindung ist jedoch vorgesehen, daß die Versteifungsfinne senkrecht auf der Versteifungsplatte steht. Ferner ist gemäß einer bevorzugten Weiterbildung vorgesehen, daß die Meßrohre zumindest in dem Bereich, in dem die Versteifungsplatte an Ihnen befestigt ist, gerade verlaufen und die Versteifungsfinne senkrecht zur Längsrichtung der Meßrohre angeordnet ist

Steht die Versteifungsfinne senkrecht auf der Versteifungsplatte und verläuft die Versteifungsfinne senkrecht zur Längsrichtung der Meßrohre, wie zuvor beschrieben, so wird erreicht, daß die Biegesteifigkeit der Verbindungseinrichtung für Biegungen in der gemeinsamen Ebene der Meßrohre größer ist als ihre Torsionssteifigkeit für Torsionsschwingungen um eine derartige Achse, die in der Ebene der Längsachsen der Meßrohre liegt und senkrecht zu diesen verläuft. Da derartige Torsionsschwingungen der Verbindungseinrichtung erzeugt werden, wenn gegenphasige Schwingungen der Meßrohre senkrecht zu ihrer gemeinsamen Ebene angeregt werden, und Biegeschwingungen der Verbindungseinrichtung in der gemeinsamen Ebene der Meßrohre dann auftreten, wenn die Meßrohre in dieser Ebene zu Anregungsschwingungen angeregt werden, werden diese beiden Arten von Schwingungen - Anregungsschwingungen einerseits und Schwingungen senkrecht dazu andererseits - durch die zuvor beschriebene Verbindungseinrichtung unterschiedlich beeinflußt:

Während die Verbindungseinrichtung nämlich gegenphasige Schwingungen senkrecht zur gemeinsamen Ebene der Meßrohre einen geringeren Biegewiderstand entgegensetzt, ist der Biegewiderstand für Schwingungen der Meßrohre in ihrer gemeinsamen Ebene, in der die Schwingungsanregung erfolgt, größer. Insgesamt wird damit frequenzmäßig eine gute Trennung von Anregungsschwingungen und dazu senkrechten Schwingungen der Meßrohre erzielt, wodurch im Ergebnis eine geringere Beeinflussung des Meßsignals durch die gegenseitige Beeinflussung von Anregungsschwingungen und Schwingungen senkrecht dazu erfolgt.

Weiterhin kann vorgesehen sein, daß sich die Versteifungsfinne nur über einen Teil der Versteifungsplatte erstreckt. Gemäß einer bevorzugten Weiterbildung der Erfindung ist jedoch vorgesehen, daß sich die Versteifungsfinne über die gesamte Breite der Versteifungsplatte erstreckt.

Im übrigen kann die Versteifungsfinne im Querschnitt unterschiedliche Formen aufweisen. Gemäß einer bevorzugten Weiterbildung der Erfindung ist vorgesehen, daß die Versteifungsfinne vollständig in einer Ebene verläuft. Alternativ dazu ist gemäß einer anderen bevorzugten Weiterbildung der Erfindung vorgesehen, daß die Versteifungsfinne im Querschnitt L-förmig oder T-förmig ist. Je nach Querschnittsform der Versteifungsfinne kann die Biegesteifigkeit der Verbindungseinrichtung beeinflußt werden, um jeweils eine gute frequenzmäßige Trennung der angesprochenen Schwingungen der Meßrohre zu erzielen.

Grundsätzlich kann es ausreichend sein, an der Versteifungsplatte eine einzelne Versteifungsfinne vorzusehen. Gemäß einer bevorzugten Weiterbildung der Erfindung ist jedoch vorgesehen, an der Versteifungsplatte eine Mehrzahl von Versteifungsfinnen anzuordnen. Auf diese Weise kann die Steifigkeit der Verbindungseinrichtung weiter erhöht werden.

Außerdem kann es ausreichend sein, daß die Verbindungseinrichtung nur eine Versteifungsplatte aufweist. Gemäß einer bevorzugten Weiterbildung der Erfindung ist jedoch vorgesehen, daß die Verbindungseinrichtung zwei einander gegenüberliegende, jeweils an beiden Meßrohren befestigte Versteifungsplatten aufweist. Dabei ist es gemäß einer bevorzugten Weiterbildung der Erfindung ferner vorgesehen, daß die Versteifungsplatten parallel zueinander ausgerichtet sind.

Beim Vorsehen von zwei Versteifungsplatten kann es grundsätzlich ausreichend sein, daß nur eine der Versteifungsplatten wenigstens eine Versteifungsfinne aufweist. Gemäß einer bevorzugten Weiterbildung der Erfindung ist jedoch vorgesehen, daß beide Versteifungsplatten wenigstens eine Versteifungsfinne aufweisen. Insbesondere ist es ganz besonders bevorzugt, daß beide Versteifungsplatten eine gleiche Anzahl von gleich ausgebildeten Versteifungsfinnen aufweisen.

Die Verbindungseinrichtung mit zwei Versteifungsplatten kann derart ausgebildet sein, daß die Versteifungsplatten außer mittelbar, nämlich über die Meßrohre, nicht miteinander verbunden sind. Gemäß einer bevorzugten Weiterbildung der Erfindung ist jedoch vorgesehen, daß die beiden Versteifungsplatten mittels einer Verbindungsplatte miteinander verbunden sind. Dabei ist es insbesondere bevorzugt, daß die Dicke der Verbindungsplatte größer ist als die Dicken der Versteifungsplatten. Beim Vorsehen einer Verbindungsplatte ist insbesondere gemäß eine bevorzugten Weiterbildung der Erfindung weiterhin vorgesehen, daß die Verbindungsplatte für jedes Meßrohr eine Bohrung aufweist, durch die das jeweilige Meßrohr hindurchgeführt ist. Dabei gilt ferner, daß der Innendurchmesser der Bohrungen vorzugsweise im wesentlichen dem Außendurchmesser der Meßrohre entspricht und daß die Meßrohre vorzugsweise in den Bohrungen befestigt sind.

Nachfolgend wird die Erfindung anhand bevorzugter Ausführungsbeispiele unter Bezugnahme auf die Zeichnung weiter erläutert. In der Zeichnung zeigt
- Fig.1: eine Verbindungseinrichtung für ein Coriolis-Massendurchflußmeßgerät gemäß einem ersten bevorzugten Ausfuhrungsbeispiel der Erfindung in perspektivischer Ansicht,
- Fig. 2: schematisch zwei Meßrohre und die diese Meßrohre verbindenden Verbindungseinrichtungen des Coriolis-Massendurchflußmeßgeräts gemäß dem ersten bevorzugten Ausfiihrungsbeispiel der Erfindung in perspektivischer Ansicht,
- Fig. 3: schematisch eine Schwingungsanregung der Meßrohre des Coriolis-Massendurchflußmeßgeräts gemäß dem ersten bevorzugten Ausführungsbeispiel der Erfindung in Draufsicht,
- Fig. 4: schematische Schwingungen der Meßrohre des Coriolis-Massendurchflußmeßgeräts gemäß dem ersten bevorzugten Ausführungsbeispiel der Erfindung senkrecht zur Ebene der Schwingungsanregung in einer Seitenansicht und
- Fig.5: eine Verbindungseinrichtung für ein Coriolis-Massendurchflußmeßgerät gemäß einem zweiten bevorzugten Ausführungsbeispiel der Erfindung in perspektivischer Ansicht.

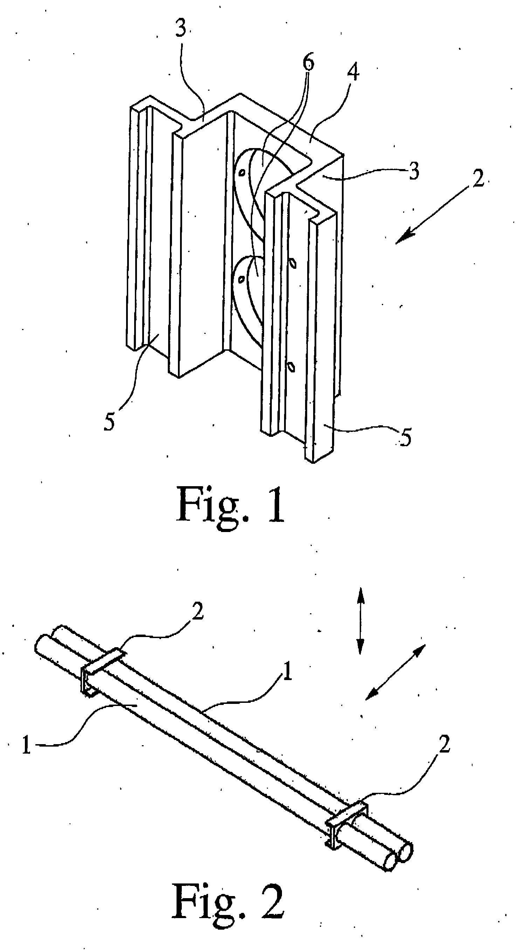

Aus den Fig. 1 und 2 ist ein Coriolis-Massendurchflußmeßgerät gemäß einem ersten bevorzugten Ausführungsbeispiel der Erfindung ersichtlich. Dargestellt sind zwei gerade, parallel zueinander verlaufende Meßrohre 1, die mit zwei Verbindungseinrichtungen 2 versehen sind. Wie aus Fig. 1 ersichtlich und in der schematischen Fig. 2 aus Gründen der Vereinfachung nicht im einzelnen dargestellt, weisen die Verbindungseinrichtungen 2 im Querschnitt jeweils ein U-förmiges Profil auf, wobei zwei Versteifungsplatten 3 derart mittels einer Verbindungsplatte 4 miteinander verbunden sind, daß die Versteifungsplatten 3 parallel zueinander und jeweils senkrecht zur Verbindungsplatte 4 ausgerichtet sind. Die Dicke der Versteifungsplatten 3 ist geringer als die Dicke der Verbindungsplatte 4. Ferner ist auf den Versteifungsplatten 3 jeweils eine Versteifungsfinne 5 angeordnet. Diese Versteifungsfinnen 5 sind im Querschnitt L-förmig, wobei sie mit dem freien Ende ihres langen Schenkels an der jeweiligen Versteifungsplatte 3 befestigt sind. Aus Fig. 1 ist ferner erkennbar, daß die Versteifungsfinnen 5 sich über die gesamte Breite einer jeweiligen Versteifungsplatte 3 erstrecken. Es gilt, daß die Verbindungseinrichtungen 2, wie vorliegend anhand des ersten bevorzugten Ausführungsbeispiel der Erfindung beschrieben, aus einem Stück gefertigt sein können aber auch aus mehreren Stücken zusammengesetzt sein können, die dann vorzugsweise miteinander verschweißt sind.

Durch die zuvor beschriebene Konstruktion der Verbindungseinrichtungen 2 wird erreicht, daß der Biegewiderstand der Verbindungseinrichtungen 2 für Torsionsschwingungen deutlich geringer ist als für Biegeschwingungen in der gemeinsamen Ebene der Meßrohre 1, Dadurch wird der zuvor schon beschriebene Vorteil erzielt, die Schwingungen der Meßrohre 1 in ihrer gemeinsamen Ebene bzw. senkrecht dazu frequenzmäßig gut zu trennen, so daß die Meßgenauigkeit erhöht wird.

In der Verbindungsplatte 4 sind zwei Bohrungen 6 vorgesehen, deren Innendurchmesser im wesentlichen dem Außendurchmesser der Meßrohre 1 entspricht. Auf diese Weise können die Verbindungseinrichtungen 2 auf die Meßrohre 1 aufgeschoben und dann mit diesen verbunden werden. Gemäß dem vorliegend beschriebenen ersten bevorzugten Ausführungsbeispiel der Erfindung ist vorgesehen, daß die Verbindungseinrichtungen 2 aus Edelstahl hergestellt sind, so daß sie mit den Meßrohren 1, die ihrerseits aus Titan bestehen, verschweißt werden können.

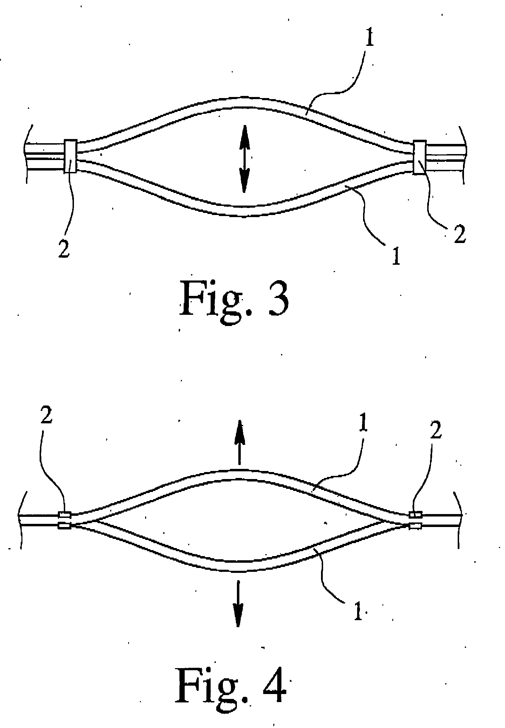

Aus den Fig. 3 und 4 ist nun im Detail ersichtlich, wie die Verbindungseinrichtungen 2 bei verschiedenen Schwingungen wirken. Auch hier sind die Verbindungseinrichtungen 2 nur wieder schematisch dargestellt. In Fig. 3 sind die beiden, mit zwei Verbindungseinrichtungen 2 verbundene Meßrohre in einer Draufsicht gezeigt, und zwar bei der maximalen Auslenkung einer Anregungsschwingung, die in der gemeinsamen Ebene der Meßrohre 1 erfolgt und bei der die Meßrohre 1 gegenphasig zueinander angeregt werden.

Es ist erkennbar, daß bei solchen Anregungsschwingungen die Verbindungseinrichtungen 2 durch die schwingenden Meßrohre 1 derart beansprucht werden, daß es zu Biegeschwingungen der Verbindungseinrichtungen 2 in der gemeinsamen Ebene der Meßrohre 1 kommt. Dazu müssen die Versteifungsplatten 3 ebenfalls derartige Biegeschwingungen in einer entsprechenden Ebene ausführen. Solchen Schwingungen wird durch das dafür erforderliche Stauchen der Versteifungsplatten 3 auf der einen Seite bzw. Dehnen auf der gegenüberliegenden Seite insbesondere durch das Vorsehen einer jeweiligen zusätzlichen Versteifungsfinne 5 ein sehr hoher Biegewiderstand entgegengesetzt.

Im Gegensatz dazu lassen sich die Verbindungseinrichtungen 2 bei gegenphasigen Schwingungen der Meßrohre 1 senkrecht zur Ebene der Schwingungsanregungen verhältnismäßig leicht zu Torsionsschwingungen anregen, wie aus Fig. 4 ersichtlich. Solchen Torsionsschwindungen setzen die Verbindungsfinnen 5 nämlich einen deutlich geringeren Widerstand entgegen. Damit wird die schon angesprochene frequenzmäßig gute Trennung dieser beiden Schwingungsarten erzielt, wodurch letztlich eine nur geringe Beeinflussung des Meßsignals durch senkrecht zu den Anregungsschwingungen erfolgende Schwingungen der Meßrohre erreicht wird.

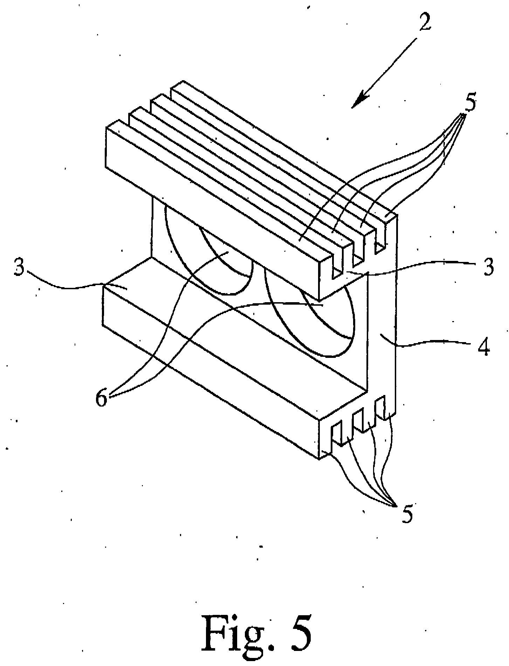

Aus Fig. 5 ist nun eine Verbindungseinrichtung 2 für ein Coriolis-Massendurchflußmeßgerät gemäß einem zweiten bevorzugten Ausführungsbeispiel der Erfindung ersichtlich. Dabei ist die Verbindungseindchtung 2 wieder im wesentlichen U-förmig, weist also zwei einander gegenüberliegende, zueinander parallele Versteifungsplatten 3 auf, die durch eine dickere Verbindungsplatte 4 miteinander verbunden sind.

In dem vorliegenden Fall weist jede Versteifungsplatte 3 eine Mehrzahl von Versteifungsfinnen 5 auf, nämlich jeweils vier Versteifiingsfinnen 5, die von den Versteifungsplatten 3 jeweils senkrecht nach außen wegstehen. Vorliegend sind die Versteifungsfinnen 5 nicht L-förmig, sondern im Querschnitt im wesentlichen quadratisch, so daß die Versteifungsfinnen 5 insgesamt jeweils in einer einzigen Ebene verlaufen. Anordnung und Funktion der Verbindungseinrichtungen 2 für das Coriolis-Massendurchflußmeßgerät gemäß dem zweiten bevorzugten Ausführungsbeispiel der Erfindung entsprechen denen, wie im Zusammenhang mit dem ersten bevorzugten Ausführungsbeispiel der Erfindung beschrieben.

## Patentansprüche

1. Massendurchflußmeßgerät, das nach dem Coriolis-Prinzip arbeitet, mit zwei wenigstens in einem Abschnitt in einer gemeinsamen Ebene verlaufenden Meßrohren (1) und einer Verbindungseinrichtung (2) mittels derer die beiden Meßrohre (1) in dem Abschnitt, in dem sie in der gemeinsamen Ebene verlaufen, miteinander verbunden sind, wobei die Verbindungseinrichtung (2) die effektive Länge des Meßbereichs bestimmt, da sie die Meßrohre (1) fixiert und damit bei der Schwingungsanregung der Meßrohre einen Schwingungsknoten definiert, und
**dadurch gekennzeichnet,**
**daß** die Verbindungseinrichtung (2) eine an beiden Meßrohren (1) befestigte und parallel zur gemeinsamen Ebene der Meßrohre (1) angeordnete Versteifungsplatte (3) aufweist und an der Versteifungsplatte (3) eine Versteifungsfinne (5) vorgesehen ist, so daß Anregungsschwingungen der Messrohre (1) in der gemeinsamen Ebene der Messrohre (1) durch dazu orthogonale Schwingungen der Messrohre (1) möglichst wenig beeinflusst werden, wobei die Meßrohre (1) zumindest in dem Bereich, in dem die Versteifungsplatte (3) an ihnen befestigt ist, gerade verlaufen und daß die Versteifungsfinne (5) senkrecht zur Längsrichtung der Meßrohre (1) angeordnet ist.

2. Massendurchflußmeßgerät nach Anspruch 1, **dadurch gekennzeichnet, daß** die Versteifungsfinne (5) senkrecht auf der Versteifungsplatte (3) steht.

3. Massendurchflußmeßgerät nach Anspruch 1 oder 2, **dadurch gekennzeichnet, daß** sich die Versteifungsfinne (5) über die gesamte Breite der Versteifungsplatte (3) erstreckt.

4. Massendurchflußmeßgerät nach einem der Ansprüche 1 bis 3, **dadurch gekennzeichnet, daß** die Versteifungsfinne (5) vollständig in einer Ebene verläuft.

5. Massendurchflußmeßgerät nach einem der Ansprüche 1 bis 3, **dadurch gekennzeichnet, daß** die Versteifungsfinne (5) im Querschnitt L-förmig oder T-förmig ist.

6. Massendurchflußmeßgerät nach einem der Ansprüche 1 bis 5, **dadurch gekennzeichnet, daß** an der Versteifungsplatte (3) eine Mehrzahl von Versteifungsfinnen (5) vorgesehen ist.

7. Massendurchflußmeßgerät nach einem der Ansprüche 1 bis 6, **dadurch gekennzeichnet, daß** die Verbindungseinrichtung (2) zwei einander gegenüberliegende, jeweils an beiden Meßrohren (1) befestigte Versteifungsplatten (3) aufweist.

8. Massendurchflußmeßgerät nach Anspruch 7, **dadurch gekennzeichnet, daß** die Versteifungsplatten (3) parallel zueinander ausgerichtet sind.

9. Massendurchflußmeßgerät nach Anspruch 7 oder 8, **dadurch gekennzeichnet, daß** beide Versteifungsplatten (3) jeweils wenigstens eine Versteifungsfinne (5) aufweisen.

10. Massendurchflußmeßgerät nach einem der Ansprüche 7 bis 9, **dadurch gekennzeichnet, daß** die beiden Versteifungsplatten (3) mittels einer Verbindungsplatte (4) miteinander verbunden sind.

11. Massendurchflußmeßgerät nach Anspruch 10, **dadurch gekennzeichnet, daß** die Dicke der Verbindungsplatte (4) größer ist als die Dicken der Versteifungsplatten (3).

12. Massendurchflußmeßgerät nach Anspruch 10 oder 11, **dadurch gekennzeichnet, daß** die Verbindungsplatte (4) für jedes Meßrohr (1) eine Bohrung (6) aufweist, durch die das jeweilige Meßrohr (1) hindurchgeführt ist.

13. Massendurchflußmeßgerät nach Anspruch 12, **dadurch gekennzeichnet, daß** der Innendurchmesser der Bohrungen (6) im wesentlichen dem Außendurchmesser der Meßrohre (1) entspricht.

14. Massendurchflußmeßgerät nach Anspruch 12 oder 13, **dadurch gekennzeichnet, daß** die Meßrohre (1) in den Bohrungen (6) befestigt sind.

## Claims

1. Mass flowmeter that operates according to the Coriolis principle, having two measuring tubes (1) extending at least in one section in a common plane and a connecting unit (2) by means of which the two measuring tubes (1) are connected to one another in the section in which they extend in the common plane, wherein the connecting unit (2) determines the effective length of the measuring range, since it fixes the measuring tubes (1) and thus defines an oscillation node during oscillation excitation of the measuring tubes, and
**characterized in**
**that** the connecting device (2) has a bracing plate (3) which is fastened to both measuring tubes (1) and is arranged parallel to the common plane of the measuring tubes (1), and a bracing fin (5) is provided on the bracing plate (3), so that excitation oscillations of the measuring tubes (1) in the common plane of the measuring tube (1) are influenced as little as possible by oscillations of the measuring tube (1) orthogonal to them, wherein the measuring tubes (1) are straight, at least in the section in which the bracing plate (3) is attached to them, and that the bracing fin (5) is arranged perpendicular to the longitudinal direction of the measuring tubes (1).

2. Mass flowmeter according to claim 1, **characterized in that** the bracing fin (5) extends vertically on the bracing plate (3).

3. Mass flowmeter according to claim 1 or 2, **characterized in that** the bracing fin (5) extends over the entire width of the bracomg plate (3).

4. Mass flowmeter according to any one of claims 1 to 3, **characterized in that** the bracing fin (5) runs completely in one plane.

5. Mass flowmeter according to any one of claims 1 to 3, **characterized in that** the bracing fin (5) is L-shaped or T-shaped in cross-section.

6. Mass flowmeter according to any one of the claims 1 to 5, **characterized in that** a plurality of bracing fins (5) are provided on the bracing plate (3).

7. Mass flowmeter according to any one of the claims 1 to 6, **characterized in that** the connecting unit (2) has two mutually opposite bracing plates (3) each fastened to both measuring tubes (1).

8. Mass flowmeter according to claim 7, **characterized in that** the bracing plates (3) are aligned parallel to one another.

9. Mass flowmeter according to claim 7 or 8, **characterized in that** both bracing plates (3) each have at least one bracing fin (5).

10. Mass flowmeter according to any one of claims 7 to 9, **characterized in that** the two bracing plates (3) are connected to one another by means of a connecting plate (4).

11. Mass flowmeter according to claim 10, **characterized in that** the thickness of the connecting plate (4) is greater than the thicknesses of the bracing plates (3).

12. Mass flowmeter according to claim 10 or 11, **characterized in that** the connecting plate (4) has a bore (6) for each measuring tube (1) through which the respective measuring tube (1) is passed.

13. Mass flowmeter according to claim 12, **characterized in that** the inner diameter of the bores (6) corresponds essentially to the outer diameter of the measuring tubes (1).

14. Mass flowmeter according to claim 12 or 13, **characterized in that** the measuring tubes (1) are fixed in the bores (6).

## Revendications

1. Débitmètre de masse, qui fonctionne selon le principe de Coriolis, comprenant deux tubes de mesure (1) s'étendant au moins dans une portion dans un plan commun et un dispositif de raccordement (2) au moyen duquel les deux tubes de mesure (1) sont raccordés l'un à l'autre dans la portion dans laquelle ils s'étendent dans le plan commun, le dispositif de raccordement (2) déterminant la longueur effective de la région de mesure, car il fixe les tubes de mesure (1) et définit ainsi un noeud d'oscillation lorsque les tubes de mesure sont amenés à osciller, et
**caractérisé en ce que**
le dispositif de raccordement (2) présente une plaque de rigidification (3) fixée aux deux tubes de mesure (1) et disposée parallèlement au plan commun des tubes de mesure (1), et une ailette de rigidification (5) est prévue au niveau de la plaque de rigidification (3), de telle sorte que des oscillations d'excitation des tubes de mesure (1) dans le plan commun des tubes de mesure (1) soient influencées aussi peu que possible par des oscillations perpendiculaires à celles-ci des tubes de mesure (1), les tubes de mesure (1) s'étendant en ligne droite au moins dans la région dans laquelle la plaque de rigidification (3) est fixée à ceux-ci, et **en ce que** l'ailette de rigidification (5) est disposée perpendiculairement à la direction longitudinale des tubes de mesure (1).

2. Débitmètre de masse selon la revendication 1, **caractérisé en ce que** l'ailette de rigidification (5) est perpendiculaire à la plaque de rigidification (3).

3. Débitmètre de masse selon la revendication 1 ou 2, **caractérisé en ce que** l'ailette de rigidification (5) s'étend sur toute la largeur de la plaque de rigidification (3).

4. Débitmètre de masse selon l'une quelconque des revendications 1 à 3, **caractérisé en ce que** l'ailette de rigidification (5) s'étend complètement dans un plan.

5. Débitmètre de masse selon l'une quelconque des revendications 1 à 3, **caractérisé en ce que** l'ailette de rigidification (5) présente une forme en L ou en T en section transversale.

6. Débitmètre de masse selon l'une quelconque des revendications 1 à 5, **caractérisé en ce qu'**une pluralité d'ailettes de rigidification (5) est prévue au niveau de la plaque de rigidification (3) .

7. Débitmètre de masse selon l'une quelconque des revendications 1 à 6, **caractérisé en ce que** le dispositif de raccordement (2) présente deux plaques de rigidification (3) opposées l'une à l'autre, fixées à chaque fois aux deux tubes de mesure (1).

8. Débitmètre de masse selon la revendication 7, **caractérisé en ce que** les plaques de rigidification (3) sont orientées parallèlement l'une à l'autre.

9. Débitmètre de masse selon la revendication 7 ou 8, **caractérisé en ce que** les deux plaques de rigidification (3) présentent à chaque fois au moins une ailette de rigidification (5).

10. Débitmètre de masse selon l'une quelconque des revendications 7 à 9, **caractérisé en ce que** les deux plaques de rigidification (3) sont raccordées l'une à l'autre au moyen d'une plaque de liaison (4) .

11. Débitmètre de masse selon la revendication 10, **caractérisé en ce que** l'épaisseur de la plaque de liaison (4) est supérieure aux épaisseurs des plaques de rigidification (3).

12. Débitmètre de masse selon la revendication 10 ou 11, **caractérisé en ce que** la plaque de liaison (4) présente pour chaque tube de mesure (1) un alésage (6) à travers lequel est guidé le tube de mesure respectif (1).

13. Débitmètre de masse selon la revendication 12, **caractérisé en ce que** le diamètre intérieur des alésages (6) correspond essentiellement au diamètre extérieur des tubes de mesure (1).

14. Débitmètre de masse selon la revendication 12 ou 13, **caractérisé en ce que** les tubes de mesure (1) sont fixés dans les alésages (6).
